Europäisches Patentamt

European Patent Office

Office européen des brevets

(11) Veröffentlichungsnummer: **0 410 110 A1**

## (12) EUROPÄISCHE PATENTANMELDUNG

(21) Anmeldenummer: 90110061.0

(22) Anmeldetag: 28.05.90

(51) Int. Cl.5: **B60J 5/06**, B62D 33/04

(30) Priorität: 27.07.89 DE 8909127 U

(43) Veröffentlichungstag der Anmeldung:
30.01.91 Patentblatt 91/05

(84) Benannte Vertragsstaaten:
BE DE DK FR GB IT NL

(71) Anmelder: **Karl Kässbohrer Fahrzeugwerke GmbH**
**Kässbohrerstrasse 13 Postfach 2660**
**D-7900 Ulm (Donau)(DE)**

(72) Erfinder: **Albrecht, Kurt**
**Im Eschle 4**
**D-7938 Oberdischingen(DE)**

(74) Vertreter: **Patentanwälte Grünecker,**
**Kinkeldey, Stockmair & Partnerner**
**Maximilianstrasse 58**
**D-8000 München 22(DE)**

(54) Transportbehälter.

(57) Der Innenraum eines Transportbehälters ist auch bei durch eine Schiebeplane verschlossener Seitenwand durch an der Oberseite des Transportbehälters befindlichen Durchgängen frei zugänglich. Ein solcher Behälter erfüllt nicht die an zollsicher verschlossene Behälter gestellten Anforderungen. Der neue Transportbehälter soll zollsicher verschließbar sein.

Die an der Oberseite des Transportbehälters vorgesehene Führungsschiene (17) weist zumindest an ihrer Unter-und Außenseite einen vertikalen Sicherungs- und Führungsschenkel (32) und das in der Führungsschiene (17) geführte Rollenelement (40) einen Haltebügel (42) mit einem Umlenklager (43) zum Aufnehmen des schlaufenförmigen Spanngurtendes (46) auf, so daß die mit dem Spanngurtende (46) verbundene Schiebeplane (16) beim Spannen des Spanngurtes (20) aus ihrer Löse- in eine den Sicherungsund Führungsschenkel hintergreifende Schließstellung in vertikaler Richtung nach oben verschiebbar und spannbar ist.

Damit ist ein zollsicheres Verschließen des Transportbehälters gewährleistet.

FIG.1

## TRANSPORTBEHÄLTER

Die Erfindung bezieht sich auf einen Transportbehälter mit einer wenigstens eine Seitenwand des Transportbehälters verschließenden Schiebeplane, welche mittels einer an der Oberseite des Transportbehälters vorgesehenen Führungsschiene und wenigstens einem darin beweglichen, einen Haltebügel aufweisenden Rollenelement gehalten und in horizontaler Richtung verschiebbar ist, und einer Vielzahl mit Abstand von nebeneinander angeordneten vertikalen Spanngurten, die jeweils zwischen dem Haltebügel des Rollenelements und dem unteren Rahmen des Transportbehälters spannbar sind.

Ein solcher Transportbehälter ist aus der Praxis und aus der EP-A1-0 153 030 bekannt. Dieser Transportbehälter weist eine Führungsschiene mit Rollenelementen auf, deren Haltebügel etwa O-förmig ausgebildet sind. Das obere Ende des Spanngurtes ist als feste Schlaufe mit darin angeordnetem unteren Teil des Haltebügels ausgebildet. Der untere Rahmen des Transportbehälters ist nach innen abgewinkelt, wobei der untere Abschnitt der Schiebeplane um den nach innen abgewinkelten unteren Rahmen geschlagen und daran mit Hilfe des Haltegliedes befestigt ist. Nachteilig ist dabei, daß der Innenraum des Transportbehälters von außen durch den O-förmigen Haltebügel zugänglich ist. Außerdem ist es möglich, den unteren Abschnitt der Schiebeplane trotz festgespanntem Halteglied um den nach innen abgewinkelten unteren Rahmen des Transportbehälters hochzuziehen. Ein solcher Transportbehälter ist als Zollausführung nicht geeignet.

Der Erfindung liegt die Aufgabe zugrunde, einen Trans portbehälter der oben angegebenen Art zu schaffen, der zollsicher verschlossen werden kann.

Diese Aufgabe wird erfindungsgemäß dadurch gelöst, daß die Führungsschiene zumindest an ihrer Unter- und Außenseite einen vertikalen Sicherungs- und Führungsschenkel aufweist und der Haltebügel des Rollenelements ein Umlenklager zum Aufnehmen einer Umlenkschlaufe des Spanngurtes bildet, deren freies Ende an der Schiebeplane in dem Sinne befestigt ist, daß beim Spannen des Spanngurtes die Schiebeplane aus einer Löse- in eine den Sicherungs-und Führungsschenkel hintergreifende Schließstellung in vertikaler Richtung nach oben verschiebbar und spannbar ist.

Mit Hilfe des an der Unter- und Außenseite der Führungsschiene vorgesehenen vertikalen Sicherungs- und Führungsschenkel ist ein sicheres Abdichten der Schiebeplanenoberseite zumindest dann gewährleistet, wenn sich die Schiebeplane in ihrer den Sicherungs- und Führungsschenkel hintergreifenden Schließstellung befindet. Ein Eindringen von außen in den Innenraum des Transportbehälters ist dadurch wirksam verhindert. Durch die Doppelfunktion ist der Sicherungs- und Führungsschenkel zum einen in der Lage, den Bereich zwischen Schiebeplaneoberseite und Haltebügel sicher zu verschließen; zum anderen wird die Schiebeplanenoberseite beim Spannen des Spanngurtes sicher aus ihrer Löse- in die den Sicherungs- und Führungsschenkel hintergreifende Schließstellung überführt.

Ein Verkanten oder Verhaken der Schiebeplane ist damit nahezu ausgeschlossen. Günstig ist ferner, daß bei diesem Transportbehälter ein Spannen der Schiebeplane auch in vertikaler Richtung möglich ist.

Durch die Befestigung des freien Endes der Umlenkschleife des Spanngurtes an der Shciebeplane wird eine einfache Lösung zum Hochziehen derselben in die Führungsschiene geschaffen. Diese ist wichtig für den zollsicheren Verschluß.

Vorteilhaft ist außerdem, an der Führungsschiene einen oberen Führungsabschnitt und an dessen unterem Ende, einteilig damit verbunden, die vertikalen Sicherungs- und Führungsschenkel vorzusehen. Eine solche Führungsschiene vereint deshalb mit einem Profil mehrere Funktion. Speziell für die Sicherungs- und Führungsschenkel vorgesehene Halte- oder Befestigungseinrichtungen entfallen. Dadurch ergibt sich insgesamt eine relativ verwindungssteife, stabile Führungsschiene. Diese Vorteile ergeben sich insbesondere dann, wenn zwei parallel zur Transportbehälter-Längsachse sich erstreckende Sicherungs- und Führungsschenkel an der Führungsschiene vorgesehen sind. Mit Hilfe des gegenseitigen Abstands der Schenkel ist ein Begrenzen einer Bewegung quer zur Transportbehälter-Längsachse möglich. Hierdurch wird ein hin- und Herflattern der Schiebeplane eingegrenzt.

Mit Hilfe des zwischen den Sicherungs- und Führungsschenkeln angeordneten Umlenklagers ist ein einfaches Überführen der Schiebeplane aus ihrer Löse- in die zwischen die Sicherungs- und Führungsschenkel eingreifende Schließstellung gewährleistet. Die parallel zur horizontalen Verschieberichtung angeordnete Drehachse ermöglicht, den Abstand zwischen den Sicherungs- und Führungsschenkeln möglichst gering zu halten und deshalb besser verschließen zu können.

Ein wirksames Abdichten des Transportbehälter-Innenraums nach außen ist insbesondere dann gegeben, wenn die Länge des Umlenklagers die Breite des Spanngurtes und der Ab stand zwischen dem Umlenklager und dem äußeren Sicherungs- und Führungsschenkel die Gesamtdicke von Spanngurt und Schiebeplane nur geringfügig übersteigt. In einem solchen Fall füllt der Spanngurt den Zwischenraum zwischen Umlenklager und Haltebügel nahezu vollständig aus. Gleiches gilt für den Abstand zwischen dem Umlenklager und dem äußeren Sicherungs- und Führungsschenkel. Da die Schiebeplane mit Hilfe des Spanngurtes eingespannt in ihrer Schließstellung gehalten ist, scheint eine Bewegung des Haltebügels quer zur Transportbehälter-Längsachse und damit ein Erzeugen eines Spaltes zwischen der Oberseite der Schiebeplane und dem äußeren Sicherungs- und Führungsschenkel in der Praxis ausgeschlossen.

Zweckmäßig ist ferner, die Schiebeplane oberhalb jedes Spannschlosses bis in Höhe des mit der Schiebeplane verbundenen Endes des Spanngurtes doppelwandig auszubilden und den Spanngurt dazwischen verschieblich anzuordnen, da dieser bei nahe dem unteren Rahmen des Transportbehälters angeordnetem Spannschloß über weite Strecken wirksam vor Umwelteinflüssen und Beschädigungen geschützt ist. Der Spanngurt kann in Längsrichtung nicht verrutschen, da die Doppelwandigkeit der Schiebeplane auf den Bereich oberhalb des Spannschlosses beschränkt ist.

Vorteilhaft ist außerdem, das um das Umlenklager geführte Ende des Spanngurtes fest mit der nach innen weisenden Wand der Schiebeplane zu verbinden, da mit Hilfe dieser Maßnahme die verlängerte Außenwand der Schiebeplane bei einem Spannen des Spanngurtes in den äußeren Spalt zwischen dem Haltebügel und dem äußeren Sicherungs- und Führungsschenkel überführbar ist. In ihrer Schließstellung ist deshalb der Haltebügel im Bereich des Umlenklagers vor äußeren Eingriffen auch durch die Schiebeplane geschützt. Damit ist der Innenraum des Transportbehälters in der Schließstellung der Schiebeplane auf vielfältige Weise vor äußerem Zugriff gesichert.

Vorteilhaft ist außerdem, die Außenwand der Schiebeplane in ihrer Lösestellung oberhalb des Spanngurtendes und unterhalb des äußeren Sicherungs- und Führungsschenkels anzuordnen, um ein weitgehendes Zuammenschieben der Schiebeplane zu einer Seite des Transportbehälters zu gewährleisten. Damit steht für eine Raffung der Schiebeplane eine ausreichende lichte Breite zur Verfügung. Wenn die Außenwand der Schiebeplane nur geringfügig unterhalb des äußeren Sicherungs- und Führungsschenkels in ihrer Lösestellung endet, ist bei einem Spannen des Spanngurtes und einem dadurch bedingten vertikalen Verschieben der Schiebeplane nach oben nur ein geringer Verschiebeweg erforderlich, um die Plane zwischen dem Umlenklager und dem äußeren Sicherungs- und Führungsschenkel anzuordnen. Dazu ist zweckmäßig, den Abstand zwischen dem Umlenklager und dem unteren Ende des äußeren Sicherungs- und Führungsschenkels größer, vorzugsweise doppelt so groß, auszubilden wie den Abstand zwischen der Oberseite der Außenwand der Schiebeplane und dem unteren Ende des äußeren Sicherungs- und Führungsschenkels. Dadurch ist ein zollsicherer Verschluß immer dann gegeben, wenn sich die Oberseite der Schiebeplane in Höhe des Umlenklagers befindet.

Mit Hilfe der an der Unterseite der Schiebeplane vorgesehenen Planösen und der mit diesen zusammenwirkenden Plankrampen am unteren Rahmen des Transportbehälters ist auch in dessen unterem Bereich ein gegen äußeren Eingriff wirksamer Verschluß des Transportbehälters gewährleistet. Günstig ist dabei, am unteren Rahmen eine Ausnehmung zur Aufnahme der vertikal sich erstreckenden Plankrampen vorzusehen, so daß diese sich vertikal nach unten erstrecken und dadurch relativ gut vor Beschädigungen geschützt sind. Außerdem bildet die Schiebeplane an ihrer Unterseite einen bei Zoll-Ausführung geforderten $90°$-Winkel aus, wenn die Plankrampen des unteren Rahmens in die Planösen der Schiebeplane eingreifen. Dadurch ist ein gleichmäßigeres Spannen und ein wirksamerer Verschluß der Unterseite der Schiebeplane ermöglicht und ein Ausreißen der Planöse aus der Schiebplane weitgehend verhindert.

Mittels der als nach innen weisender Gegenhaken ausgebildeten Hinterwand der Ausnehmung ist ein sicheres Aufnehmen und Halten des Haltegliedes beim Spannen der Schiebeplane sichergestellt.

Vorteilhafterweise ist im Bereich des unteren Rahmens, insbesondere bei als Wechselbehälter ausgebildetem Transportbehälter, ein schwenkbares Schutzblech vorgesehen, um Seitenwand und Schiebeplane beim Umsetzen des Transportbehälters zu schützen. Mit Hilfe der sich längs des Schutzblechs und unterhalb des Trabsportbehälter-Bodens erstreckenden Aufnahmenut und des darin angeordneten mit Hilfe eines Keders verstärkten unteren Endes der Schiebeplane ist diese im Bereich des Schutzblechs wirksam gegen ein Hochziehen gesichert. Eine gesonderte Befestigungseinrichtung für das Schutzblech kann entfallen, wenn dieses mittels eines oder mehrerer darüber verlaufender Spanngurte in seiner Schließstellung gehalten ist.

Ein zollsicheres Verschließen des Transportbehälters ist schließlich besonders einfach durch ein durch die Plankrampfen und durch Öffnungen in den Spannverschlüssen geführtes Zollseil möglich. Auf diese Weise kann ein Transportbehälter lediglich durch ein Zollsiegel abgesichert werden, was bei der Abfertigung zu geringeren Standzeiten des Transportbehälters führt.

Ausführungsbeispiele des Erfindungsgegenstandes werden nachfolgend anhand der Zeichnung näher erläutert. Es zeigen:

Fig. 1 einen teilweisen Schnitt durch eine Oberseite eines Transportbehälters gemäß I-I in Fig. 2;

Fig. 2 eine schematische Seitenansicht des gesamten Transportbehälters;

Fig. 3 eine Seitenansicht eines in der Führungsschiene beweglichen Rollenelements;

Fig. 4 einen Schnitt durch eine erste Ausführungsform des unteren Rahmens des Transportbehälters entlang der Linie IV-IV in Fig. 2;

Fig. 5 eine zweite Ausführungsform des unteren Rahmens des Transportbehälters;

Fig. 6 eine dritte Ausführungsform des unteren Rahmens des Transportbehälters;

Fig. 7 einen Schnitt durch eine Seitenwand des Transportbehälters, wobei Schiebeplane und Spanngurt sich in der Lösestellung befinden;

Fig. 8 einen Schnitt durch eine Seitenwand des Transportbehälters, wobei Schiebeplane und Spanngurt sich in der Schließstellung befinden; und

Fig. 9 eine schematische Seitenansicht des mit einem Zollseil verschlossenen Transportbehälters gemäß der Einzelheit IX in Fig. 2.

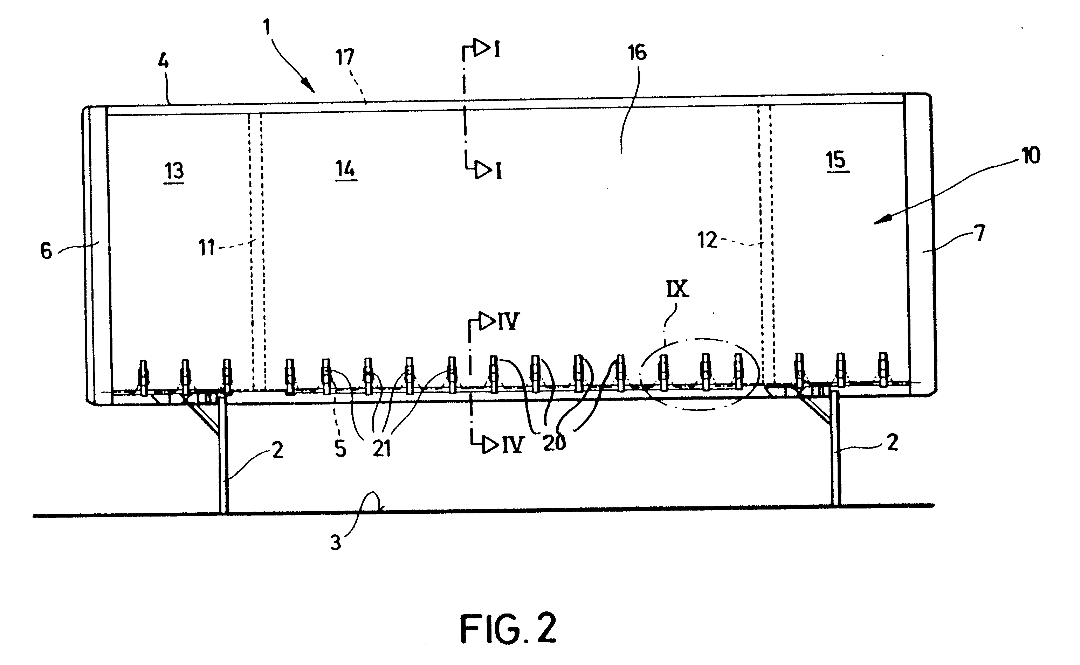

In Fig. 2 ist eine schematische Seitenansicht eines Transportbehälters 1 gezeigt, der mit Füßen 2 auf dem Boden 3 aufsteht. Der Transportbehälter 1 weist eine parallel zu dessen Längsachse sich erstreckende Deckenwand 4 und einen davon beabstandeten Transportbehälter-Boden 5 sowie eine quer dazu angeordnete Vorderwand 6 und Rückwand 7 auf. Deckenwand 4, Transportbehälter-Boden 5, Vorderwand 6 und Rückwand 7 sowie die nicht dargestellte hintere Seitenwand sind starr und geschlossen ausgebildet.

Die in Fig. 2 sichtbare Seitenwand 10 ist durch eine vordere Strebe 11 und eine hintere Strebe 12 in drei Abschnitte 13, 14 und 15 unterteilt, welche mit einer in horizontaler Richtung verschiebbaren Schiebeplane 16 verschließbar sind. An der Oberseite des Transportbehälters 1 ist eine Führungsschiene 17 vorgesehen, in der die Schiebeplane 16 beweglich gehalten ist. Der Transportbehälter bzw. die Schiebeplane weist eine Vielzahl von nebeneinander mit Abstand angeordneten, vertikalen Spanngurten 20 auf, die einenends nahe der Führungsschiene 17, andernends nahe dem Transportbehälter-Boden 5 befestigbar und mittels eines Spannverschlusses 21 spannbar sind.

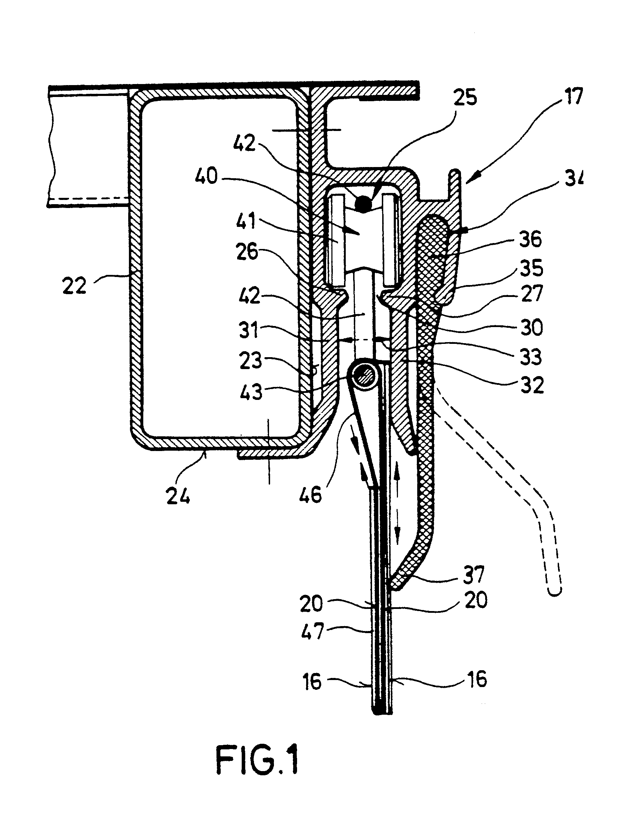

Ein Schnitt entlang der Linie I-I in Fig. 2 ist in Fig. 1 dargestellt. Die Oberseite des Transportbehälters weist einen Dachrahmen 22 mit rechteckigem Querschnitt auf, an dessen Außenseite 23 die Führungsschiene 17 flächig abgestützt und ebenso wie an der Unterseite 24 befestigt ist. Die Führungsschiene 17 weist einen dreiseitig geschlossenen oberen Führungsabschnitt 25 auf, dessen nach unten weisender Abschnitt zwischen zwei gegeneinander weisenden vorspringenden Schienen 26, 27 eine Durchtrittsöffnung 30 nach unten freigibt. Mit dem unteren Ende des oberen Führungsabschnitts 25, d.h. direkt an die Schienen 26, 27 anschließend, ist jeweils ein vertikaler Sicherungs- und Führungsschenkel 31, 32 einteilig verbunden. Der Schenkel 31 liegt dabei innen und der Schenkel 32 außen.

Die Sicherungs- und Führungsschenkel 31, 32 weisen einen etwa konstanten gegenseitigen Abstand 33 voneinander auf und erstrecken sich ebenso wie die gesamte Führungsschiene 17 parallel zur Transportbehälter-Längsachse. An der Außenseite des oberen Führungsabschnitts 25 erstreckt sich eine nach unten offene Aufnahmeschiene 34, deren äußeres unteres Ende mit einer nach innen weisenden Nase 35 versehen ist. In der Aufnahmeschiene 34 sitzt ein sich parallel zur Transportbehälter-Längsachse erstreckender vertikales Dichtgummi 36 mit einem nach innen weisenden, auf der Schiebeplane 16 aufliegenden unteren Ende 37. Der Dichtgummi 36 besteht aus einem elastischen Material und kehrt bei einem Abheben von der Schiebeplane 16 gemäß der gestrichelten Darstellung in Fig. 1 selbsttätig in die an der Schiebeplane anliegende Abdeckstellung zurück.

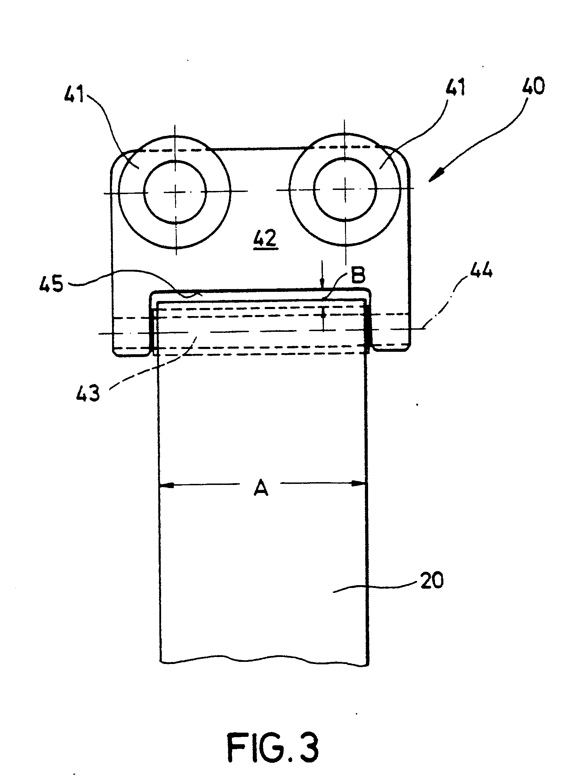

Im oberen Führungsabschnitt 25 sitzt eine Vielzahl auf den Schienen 26, 27 in horizontaler Richtung verschiebbarer Rollenelemente 40. Jedes Rollenelement 40 weist wenigstens eine Rolle 41 und einen darauf gelagerten Haltebügel 42 auf, dessen unterer Abschnitt such vertikal nach unten durch die Durchtrittsöffnung 30 zwischen die Sicherungs- und Führungsschenkel 31, 32 erstreckt und ein Umlenklager 43 aufnimmt. Die Drehachse 44 des Umlenklagers 43 (siehe Fig. 3) erstreckt sich parallel zur horizontalen Verschieberichtung innerhalb des nahezu konstanten Abstands 33 der Sicherungs- und Führungsschenkel.

Die Länge des Umlenklagers 43 entspricht etwa der Breite A des Spanngurtes 20. Vorzugsweise übersteigt die Länge des Umlenklagers die Breite des Spanngurtes um ein geringes Maß. Gleiches gilt für den vertikalen Abstand B zwischen dem unteren Ende 45 des Haltebügels 42 und dem Umlenklager 43, welcher mindestens der Dicke des Spanngurtes 20 entspricht.

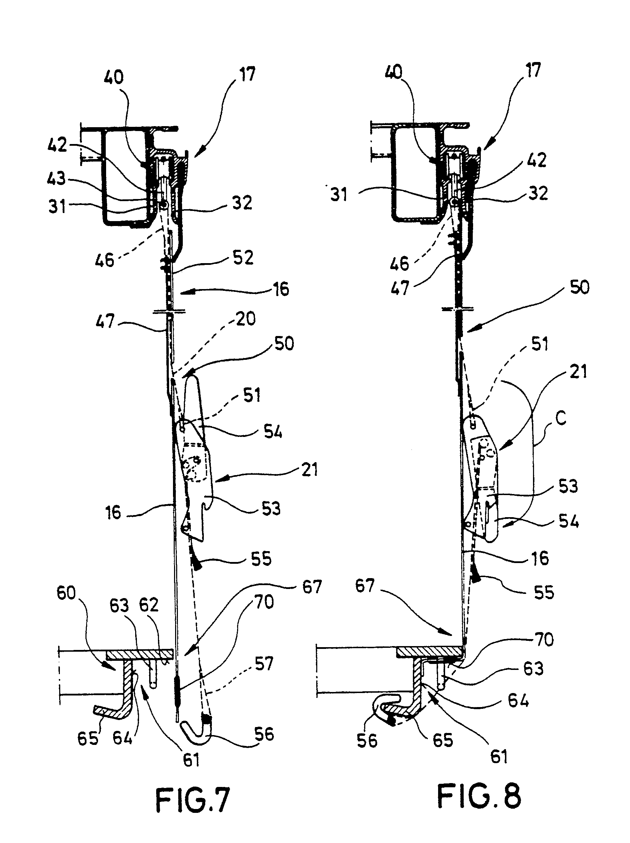

Gemäß Fig. 1 nimmt das Umlenklager 43 das schlaufenförmige Ende 46 des Spanngurtes 20 auf, das gemäß den Fig. 7 und 8 fest mit der Innenwand 47 der Schiebeplane 16 verbunden ist.

In dem Bereich der Oberseite des Transportbehälters überdeckt die Schiebeplane 16 jeweils die Außenseite des Spanngurtes 20 mit Ausnahme eines geringen, um das Umlenklager 43 geschlagenen Abschnitts. In der in Fig. 1 gezeigten den äußeren Sicherungs- und Führungsschenkel 32 hintergreifenden Schließstellung der Schiebeplane 16 entspricht der Abstand zwischen dem Umlenklager 43 und dem äußeren Sicherungs- und Führungsschenkel 32 etwa der Gesamtdicke von Spanngurt 20 und Schiebeplane 16. Das obere Ende der Innenwand 47 der Schiebeplane 16 befindet sich in dieser Stellung oberhalb des unteren Endes 37 des Dichtgummis 36 und unterhalb des unteren Endes des Sicherungs- und Führungsschenkels 31.

Wie genauer in den Fig. 7 und 8 dargestellt, ist die Schiebeplane 16 oberhalb jedes Spannverschlusses 21 bis in Höhe des mit der Schiebeplane verbundenen Endes 46 des Spanngurtes 20 doppelwandig mit dazwischen verschieblich angeordnetem Spanngurt ausgebildet. Die Breite des doppelwandigen Schiebeplanenabschnitts entspricht etwa der Breite A des Spanngurtes 20. Außerhalb diese Bereichs ist die Schiebeplane 16 einwandig ausgebildet. Um den Spanngurt 20 nach außen führen und betätigen zu können, ist in dem doppelwandigen Abschnitt der Schiebeplane eine Durchgangsöffnung 50 knapp oberhalb des Spannverschlusses 21 vorgesehen. Das nach außen geführte Ende 51 des Spanngurtes 20 ist mit der Oberseite des Spannverschlusses 21 fest verbunden. Der oberhalb des Spannverschlusses 21 vorgesehene Spanngurt 20 ist von der Oberseite des Spannverschlusses 21 durch die Durchgangsöffnung 50 zwischen dem doppelwandig ausgebildeten Teil der Schiebeplane 16 um das Umlenklager 43 bis zur Oberseite der Innenwand 47 geführt und mit dieser fest verbunden. In der in Fig. 7 gezeigten Lösestellung endet die Außenwand 52 der Schiebeplane 16 oberhalb des mit der Innenwand 47 befestigten schlaufenförmigen Endes 46 des Spanngurtes 20 und geringfügig unterhalb des unteren Endes des äußeren Sicherungs- und Führungsschenkels 32. Der Abstand zwischen dem Umlenklager 43 und dem unteren Ende des äußeren Sicherungs-und Führungsschenkels 32 ist größer als der Abstand zwischen der Oberseite der Außenwand 52 der Schiebeplane 16 und dem unteren Ende des äußeren Sicherungs- und Führungsschenkels 32 und übersteigt letzteren etwa um den Faktor 2 bis 3.

Der Spannverschluß 21 ist schematisch in den Fig. 7 und 8 dargestellt und weist ein mit dem Ende 51 des Spanngurtes 20 verbundenes Grundelement 53 mit voneinander beabstandeten Seitenwänden auf, zwischen denen ein mit dem unteren Teil des Spanngurtes 20 verbundenes Spannelement 54 verschwenkbar gelagert ist. Das untere Spanngurtende 55 ist aus dem Spannverschluß 21 nach unten geführt und außerhalb des ein Halteglied 46 aufnehmenden schlaufenförmigen Endes 57 des Spanngurtes 20 angeordnet. Fig. 7 zeigt die geöffnete Stellung, Fig. 8 die geschlossene Stellung des Spannverschlusses 21.

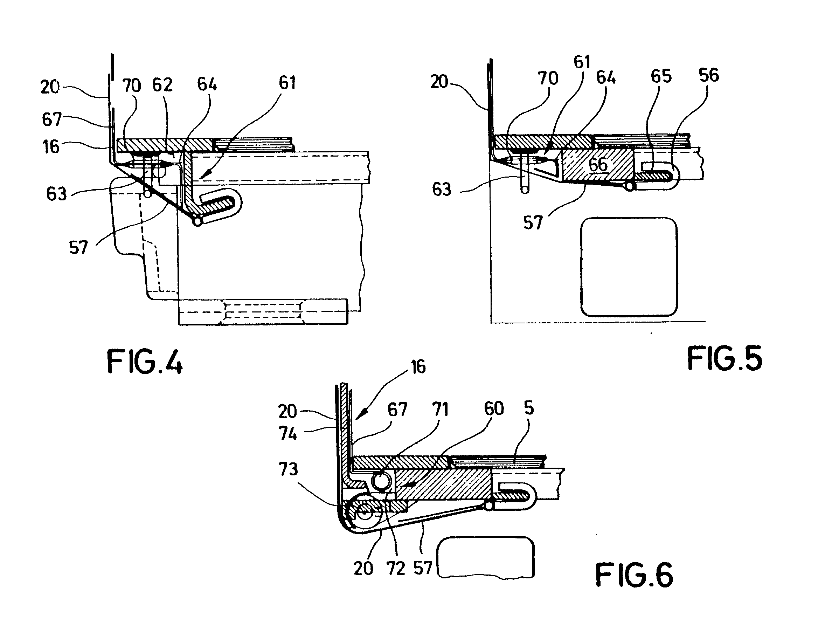

Die Befestigung des Spanngurtes 20 am unteren Rahmen 60 des Transportbehälters 1 ist genauer in den Fig. 4 bis 8 gezeigt. Gemäß Fig. 7 weist der untere Rahmen 60 eine Ausnehmung 61 auf, an dessen horizontaler Oberseite 62 eine vertikal sich erstreckende Plankrampe 63 mit halbrundem oder -ovalem Querschnitt nach unten vorstehend befestigt ist. Die vertikal sich erstreckende Hinterwand 64 der Ausnehmung 61 läuft in einen nach innen, d.h. zum Transportbehälter-Innenraum weisenden, leicht nach oben sich erstreckenden Gegenhaken 65 zum Befestigen des Haltegliedes 56 des Spanngurtes 20 aus. Fig. 8 zeigt die den Gegenhaken 65 umgreifende Stellung des Haltegliedes 56.

Verschiedene Ausführungsformen der Befestigung von Halteglied und Gegenhaken sind in den Fig. 4 bis 6 dargestellt, wobei die Ausführungsform gemäß Fig. 4 der schematischen Darstellung gemäß den Fig. 7 und 8 entspricht.

Demgegenüber ist die Ausführungsform gemäß Fig. 5 relativ flach mit horizontal nach innen weisendem Gegenhaken 65 und entsprechend diesen hintergreifendem Halteglied 56 ausgebildet. Zwischen der Plankrampe 63 und dem Gegenhaken 65 ist ein die Hinterwand 64 bildendes, längsverlaufendes Rahmenteil 66 vorgesehen.

Die Schiebeplane 16 weist an ihrer Unterseite 67 horizontal voneinander beabstandete Planösen 70 auf, die mit den Plankrampen 63, wie in den Fig. 4 bis 6 und 8 gezeigt, zusammenwirken. Das Ende der Unterseite 67 der Schiebeplane 16 kommt in der Schließstellung der Schiebeplane etwa an der Hinterwand 64 des Rücksprungs 61 zu liegen.

Eine weitere Ausführungsform des unteren Rahmens 60 ist, insbesondere bei als Wechselbehälter ausgebildetem Transportbehälter 1, in Fig. 6 dargestellt. Bei dieser Ausführungsform ist die Unterseite 67 der Schiebeplane 16 mittels eines Keders 71 verstärkt. Dieser sitzt in der Schließstellung der Schiebeplane in einer unterhalb des Transportbehälter-Bodens 5 sich parallel zur Transportbehälter-Längsachse erstreckenden Aufnahmenut 72, welche an ihrer Außenseite von einem um eine horizontale Längsachse 73 schwenkbaren Schutzblech 74 zum Abstützen von Seitenwand und Schiebeplane abgedeckt ist. In der in Fig. 6 gezeigten Schließstellung kann die Unterseite 67 der Schiebeplane nicht aus der Aufnahmenut 72 herausgezogen werden. In dieser Stellung ist das Schutzblech 74 mittels zweier das Schutzblech überdeckender Spanngurte 20 gehalten.

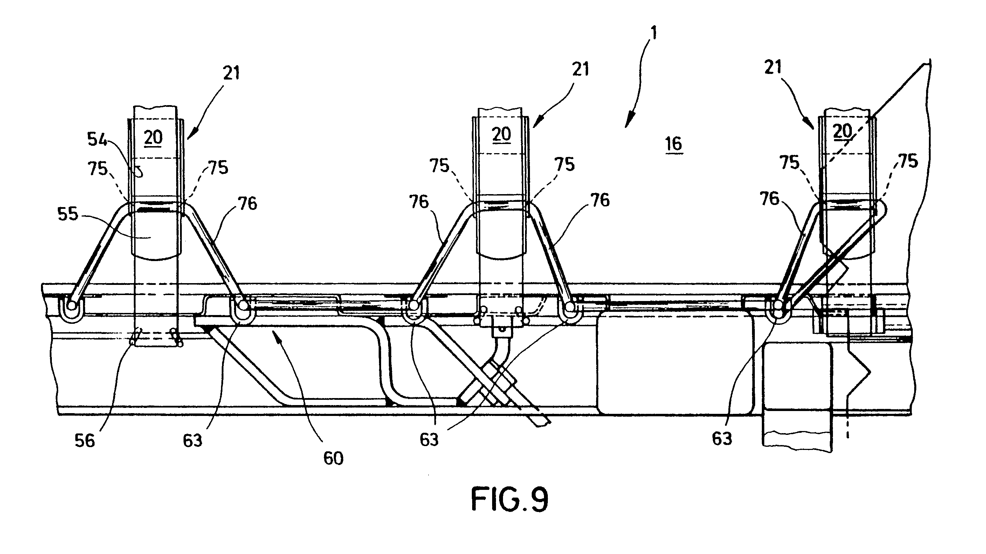

Fig. 9 zeigt eine Seitenansicht eines Teils des verschlossenen Transportbehälters 1. Die einzelnen vertikalen Spanngurte 20 sind horizontal voneinander beabstandet. Jeder Spannverschluß 21 weist Öffnungen 75 auf, die in der Schließstellung des Spannverschlusses in axialer Richtung, d.h. parallel zur Transportbehälter-Längsachse, miteinander fluchten. Zum zollsicheren Verschließen des Transportbehälters 1 ist ein Zollseil 76 durch die von den Planösen 70 der Schiebeplane 16 beaufschlagten Plankrampen 63 und durch die miteinander fluchtenden Öffnungen 75 in den Spannverschlüssen gezogen. Das Zollseil kann mittels eines Zollsiegels (nicht gezeigt) gesichert sein.

Nachfolgend wird das Verschließen des Transportbehälters 1 anhand der Fig. 1, 2 und 7, 8 näher beschrieben.

Zum Beschicken des Transportbehälters ist die Schiebeplane 16 beispielsweise an der Rückwand 7 zusammengeschoben. Zum Verschließen des Transportbehälters wird die Schiebeplane in horizontaler Richtung mittels der in der Führungsschiene 17 horizontal beweglichen Rollenelemente 40 zur Vorderwand 6 gezogen, so daß die Schiebeplane 16 die gesamte zu verschließende Seitenwand 10 abdeckt. Bei dieser horizontalen Verschiebebewegung befindet sich die Schiebeplane 16 und der Spannverschluß 21 in der Lösestellung gemäß Fig. 7. Anschließend werden sämtliche in der Unterseite 67 der Schiebeplane 16 befindliche Planösen 70 über die Plankrampen 63 gesteckt und der Haken 56 jedes Spanngurtes 20 den Gegenhaken 65 hintergreifend am unteren Rahmen 60 befestigt.

Die Schiebeplane wird in vertikaler Richtung durch ein nach unten gerichtetes Ziehen am Spanngurtende 55 gespannt, wobei die gesamte Schiebeplane aus ihrer Löse- in ihre Schließstellung überführt wird (vgl. Fig. 7 und 8). Durch das nach unten gerichtete Ziehen am Spanngurtende 55 wird zum einen der den Haken 56 aufnehmende Teil des Spanngurtes 20, zum anderen aber auch das mit der Innenwand 47 der Schiebeplane 16 verbundene, um das Umlenklager 43 geführte schlaufenförmige Ende 46 gespannt, wodurch die Schiebeplane 16 mit ihrer Innenwand 47 und ihrer Außenwand 52 vertikal nach oben gezogen wird, bis das obere Ende der Außenwand 52 der Schiebeplane 16 zwischen dem Umlenklager 43 und dem äußeren Sicherungs- und Führungsschenkel 32 angeordnet ist. Bei dieser vertikalen Verschiebebewegung gleitet der oberhalb des Spannverschlusses angeordnete Teil des Spanngurtes durch den doppelwandigen Abschnitt der Schiebeplane 16. Das in Fig. 7 dargestellte Umlenklager 43 wird beim Spannen der Schiebeplane 16 im Uhrzeigersinn betätigt.

Sobald die Schiebeplane gespannt ist, wird das Spannelement 54 des Spannverschlusses 21 aus der Stellung gemäß Fig. 7 in die Stellung gemäß Fig. 8 überführt (s. Pfeil C) und im Grundelement 53 gesichert. Der Verschluß kann so ausgebildet sein, daß die Schiebeplane durch die abwärts gerichtete Bewegung des Spannelementes nochmals nachgespannt wird.

Zum zollsicheren Verschließen des Transportbehälters 1 wird schließlich das Zollseil gemäß Fig. 9 durch die Plankrampen 63 und die Öffnungen 75 des Spannverschlusses 21 (in Fig. 7 und 8 nicht gezeigt) gezogen und mit Hilfe eines nicht dargestellten Zollsiegels gesichert. Der Transportbehälter ist damit zollsicher verschlossen. Das Öffnen des Transportbehälters erfolgt in umgekehrter Reihenfolge.

## Ansprüche

1. Transportbehälter
mit einer wenigstens eine Seitenwand des Transportbehälters verschließenden Schiebeplane, welche mittels einer an der Oberseite des Transportbehälters vorgesehenen Führungsschiene und wenigstens einem darin beweglichen, einen Haltebügel aufweisenden Rollenelement gehalten und in horizontaler Richtung verschiebbar ist, und
einer Vielzahl von mit Abstand nebeneinander angeordneten vertikalen Spanngurten, die jeweils zwischen dem Haltebügel des Rollenelements und dem unteren Rahmen des Transportbehälters spannbar sind,
**dadurch gekennzeichnet,**
daß die Führungsschiene (17) zumindest an ihrer Unter- und Außenseite einen vertikalen Sicherungs- und Führungsschenkel (32) aufweist und der Haltebügel (42) des Rollenelements (40) ein Umlenklager (43) zum Aufnehmen einer Umlenkschlaufe (46) des Spanngurtes (20) bildet, deren freies Ende an der Schiebeplane in dem Sinne befestigt ist, daß beim Spannen des Spanngurtes die Schiebeplane (16), aus einer Löse- in eine den Sicherungs- und Führungsschenkel hintergreifende Schließstellung in vertikaler Richtung nach oben verschiebbar und spannbar ist.

2. Transportbehälter nach Anspruch 1, **dadurch gekennzeichnet,** daß die Führungsschiene (17) einen oberen Führungsabschnitt (25) zur Aufnahme der Rollenelemente (40) aufweist, mit dessen unterem Ende die vertikalen Sicherungs- und Führungsschenkel (31, 32) einteilig verbunden sind.

3. Transportbehälter nach Anspruch 1 und 2, **dadurch gekennzeichnet,** daß die Führungsschiene (17) zwei sich parallel zur Transportbehälter-Längsachse unter Ausbildung eines gegenseitigen Abstands (33) erstreckende Sicherungs- und Führungsschenkel (31, 32) aufweist.

4. Transportbehälter nach einem der vorhergehenden Ansprüche, **dadurch gekennzeichnet,** daß das Umlenklager (43) des Haltebügels (42) eine parallel zur horizontalen Verschieberichtung angeordnete Drehachse (44) aufweist und zwischen den Sicherungs- und Führungsschenkeln (31, 32) angeordnet ist.

5. Transportbehälter nach einem der vorhergehenden An sprüche, **dadurch gekennzeichnet, daß** die Länge des Umlenklagers (43) die Breite des Spanngurtes (20) und der Abstand zwischen dem Umlenklager (43) und dem äußeren Sicherungs- und Führungsschenkel (32) die Gesamtdicke von Spanngurt und Schiebeplane (16) geringfügig übersteigen.

6. Transportbehälter nach einem der vorhergehenden Ansprüche mit einem Spannverschluß für jeden Spanngurt, **dadurch gekennzeichnet, daß** die Schiebeplane (16) oberhalb jedes Spannverschlusses (21) bis in Höhe des mit der Schiebeplane verbundenen Endes (46) des Spanngurtes doppelwandig mit dazwischen verschieblich angeordnetem Spanngurt (20) ausgebildet ist.

7. Transportbehälter nach einem der vorhergehenden Ansprüche, **dadurch gekennzeichnet, daß** das um das Umlenklager (43) geführte Ende (46) des Spanngurtes mit der Innenwand (47) der Schiebeplane (16) fest verbunden ist.

8. Transportbehälter nach einem der vorhergehenden Ansprüche, **dadurch gekennzeichnet, daß** die Außenwand (52) der Schiebeplane (16) in ihrer Lösestellung oberhalb des Spanngurtendes (46) und geringfügig unterhalb des äußeren Sicherungs- und Führungsschenkels (32) endet.

9. Transportbehälter nach einem der vorhergehenden Ansprüche, **dadurch gekennzeichnet, daß** der Abstand zwischen dem Umlenklager (43) und dem unteren Ende des äußeren Sicherungs- und Führungsschenkels (32) mindestens doppelt so groß ist, wie der Abstand zwischen der Oberseite der Außenwand (52) und dem unteren Ende des äußeren Sicherungs- und Führungsschenkels (32).

10. Transportbehälter nach einem der vorhergehenden Ansprüche, **dadurch gekennzeichnet, daß** die Schiebeplane (16) an ihrer Unterseite (67) horizontal voneinander be abstandete Planösen (70) und der untere Rahmen (60) des Transportbehälters (1) mit den Planösen zusammenwirkende Plankrampen (63) aufweist.

11. Transportbehälter nach einem der vorhergehenden Ansprüche, **dadurch gekennzeichnet, daß** der untere Rahmen (60) des Transportbehälters (1) eine Ausnehmung (61) zur Aufnahme der vertikal sich erstreckenden Plankrampe (63) aufweist.

12. Transportbehälter nach einem der vorhergehenden Ansprüche, **dadurch gekennzeichnet, daß** die Ausnehmung (61) eine Hinterwand (64) aufweist, die als nach innen weisender Gegenhaken (65) zum Befestigen des Haltegliedes (56) des Spanngurtes (20) ausgebildet ist.

13. Transportbehälter nach einem der vorhergehenden Ansprüche, **dadurch gekennzeichnet, daß** im Bereich des unteren Rahmens (60), insbesondere bei als Wechselbehälter ausgebildetem Transportbehälter, ein um ene horizontale Längsachse (73) schwenkbares Schutzblech (74) zwecks Abstützens von Seitenwand und Schiebeplane vorgesehen ist.

14. Transportbehälter nach einem der vorhergehenden Ansprüche, **dadurch gekennzeichnet, daß** der untere Rahmen (60) eine längs des Schutzblechs (74) und unterhalb des Transportbehälter-Bodens (5) sich erstreckende Aufnahmenut (72) aufweist.

15. Transportbehälter nach einem der vorhergehenden Ansprüche, **dadurch gekennzeichnet, daß** die Schiebeplane (16) an ihrer Unterseite (67) mittels eines an die Aufnahmenut (72) angepaßten Keders (71) verdickt ist.

16. Transportbehälter nach einem der vorhergehenden Ansprüche, **dadurch gekennzeichnet, daß** das Schutzblech (74) mittels zweier Spanngurte (20) in seiner Schließstellung gehalten ist.

17. Transportbehälter nach einem der vorhergehenden Ansprüche, **dadurch gekennzeichnet, daß** zum zollsicheren Verschließen des Transportbehälters (1) lediglich ein durch die Plankrampen (63) und durch Öffnungen (75) in den Spannverschlüssen (21) geführtes Zollseil (76) vorgesehen ist.

# FIG.1

FIG. 2

FIG.3

FIG.4

FIG.5

FIG.6

11

FIG.7          FIG.8

FIG.9

Europäisches
Patentamt

Nummer der Anmeldung

EUROPÄISCHER
RECHERCHENBERICHT

EP 90 11 0061

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | DE-U-8 909 127 (KÄSSBOHRER FAHRZEUGWERKE) <br> * das ganze Dokument * <br> – – – | 1-17 | B 60 J 5/06 <br> B 62 D 33/04 |
| X | GB-A-2 071 582 (TRENDE TRANSPORT DESIGN) <br> * Figuren 5-8 * <br> – – – | 1,2,4,5,7 | |
| A | FR-A-2 567 951 (BLOND BAUDOUIN) <br> * Figuren 1-3 * <br> – – – | 1,2 | |
| D,A | EP-A-0 153 030 (BOALLOY) <br> * Figuren 2-4 * <br> – – – | 12 | |
| A | GB-A-2 093 099 (SOUTHFIELDS COACHWORKS) <br> – – – – – | | |

RECHERCHIERTE .
SACHGEBIETE (Int. Cl.5)

B 60 J
B 62 D

Der vorliegende Recherchenbericht wurde für alle Patentansprüche erstellt

| Recherchenort | Abschlußdatum der Recherche | Prüfer |
|---|---|---|
| Den Haag | 07 November 90 | LUDWIG H J |